# EUROPEAN PATENT SPECIFICATION

(11) **EP 2 350 713 B1**
(45) Date of publication and mention of the grant of the patent: **26.03.2014**
(21) Application number: 09828600.8
(22) Date of filing: 02.11.2009
(51) Int. Cl.: F21V 8/00

(54) **LIGHT GUIDE BOARD AND LIGHT GUIDE KEY BOARD**
LICHTLEITERKARTE UND LICHTLEITERSCHLÜSSELKARTE
PLAQUE DE GUIDAGE DE LUMIÈRE ET CLAVIER DE GUIDAGE DE LUMIÈRE

(30) Priority: 27.11.2008 CN 200820214034 U
(43) Date of publication of application: 03.08.2011
(73) Proprietor: Byd Company Limited, Shenzhen, Guangdong 518118 (CN)
(72) Inventor: GUAN, Juncheng, Shenzhen Guangdong 518118 (CN)
(74) Representative: Gulde Hengelhaupt Ziebig & Schneider
(86) International application number: PCT/CN2009/074757
(87) International publication number: WO 2010/060340

(56) References cited:
- WO-A1-2008/062713
- CN-A- 101 145 457
- CN-A- 101 165 515
- CN-Y- 201 311 498
- DE-U1-202007 016 762
- JP-A- 4 192 231
- US-A1- 2007 013 664
- US-B2- 7 407 314

## Description

### TECHNICAL FIELD OF THE INVENTION

The present invention relates to components of electronic products, in particular to a light guide board and light guide key board.

### BACKGROUND OF THE INVENTION

Along with the development of electronic product industry towards the super thin direction, accordingly the components of the electronic product are also developing towards the same direction. However, the current light guide board of the portable electronic products is mainly formed by binding the injection molded PC board with the silica gel key board to achieve both light guide function and good key press handle; or the light guide board can also be formed by injection molding the liquid silica gel with injection molded PC light guide board to combine the original separated two portions, the formed product also has both light guide function and good key press handle. However, the formed light guide board by the above two methods tends to be too thick. Some products employ the light guide board formed from pure silica gel, but the light guide performance of the pure silica gel board is weak, the light conducted from LED light source has dark light emitting area and is not uniform, which is difficult to meet the requirements of the products nowadays. The light board formed by coating silica gel on the back surface of the whole size PC sheet with a thickness of 0.12mm has good light guide effect, but the PC sheet is harder and the material itself has great tension, thus the handle of key press of the product is not good which as a result will affect the whole product performance.

### SUMMARY OF THE INVENTION

The present invention is directed to solve at least one problem in the prior art and provides a novel light guide board and light guide key press board. The technical solution is as follows:

According to an embodiment of the present invention, a light guide board comprises a buffer layer, and a plurality of discrete light guide plates; said light guide plate has a first surface formed on the buffer layer by injection molding, a second surface having injected pressing points with buffer function, and a light scattering portion.

Preferably, the average thickness of said light guide plate is about 0.08-0.2 mm.

The pressing points may formed by injection molding on the surface of the light guide plate which has light scattering portion or on the surface of the light guide plate which has no light scattering portion.

The light scattering portion of the light guide plate may be set on a concave portion of the light guide plate or on a convex portion of the light guide plate.

Preferably, the light guide plate is coated by an interface layer.

Preferably, there is a plurality of said light scattering portions which are cones with different heights. Preferably, the amount of said light scattering portions is in a direct proportion to the distance between the light guide plate and the light source.

Preferably, the buffer layer has a hollow containing portion for containing keys, and the hollow containing portion has continuous or un-continuous groove and a convex portion formed thereof, the first surface of the light guiding plate is formed on the convex exterior surface of the containing portion.

According to an embodiment of the present invention, a light guide key board comprises the above mentioned light guide plate and keys, the keys are fixed in the mirror image area where the mirror surface is the contact surface between the light guide board and the buffer layer.

According to another embodiment of the present invention, a light guide key board comprises a light guide board comprising a plurality of discrete light guide plates; said light guide plate has a first surface formed on the buffer layer by injection molding, a second surface having injected pressing points with buffer function, and a light scattering portion, and a buffer layer having a hollow containing portion for containing keys, and the hollow containing portion has continuous or non-continuous groove and a convex portion formed thereof, the first surface of the light guiding plate being formed on the convex exterior surface of the containing portion.

The light guide board and light guide key board has the following advantages: a plurality of discrete light guide plates having light scattering portions are employed in the present invention, and the light guide plate is not necessarily formed to be the conventional shapes by injection molding; the thickness of the light guide plate is decreased comparing with those prepared according to the conventional method. In this case, the uniformity of light guide can be ensured and the whole thickness of the light guide plate may be decreased. In the present invention, buffer layers or pressing points with buffer function are set on both sides of the light guide plate which ensures the key-press handle of the light guide board.

### BRIEF DESCRIPTION OF THE DRAWINGS

Fig 1 is a structure sketch map of the first example of the present invention.
Fig 2 is a structure sketch map of the second example of the present invention. Marks
   1 pressing point
   2 containing portion
   3 light scattering portion
   4 light guide plate
   5 buffer layer

### DETAILED DESCRIPTION OF THE EMBODIMENTS

The technical characteristics, advantages as well as the objects of the present invention can be further understood in conjunction with the following description and drawings.

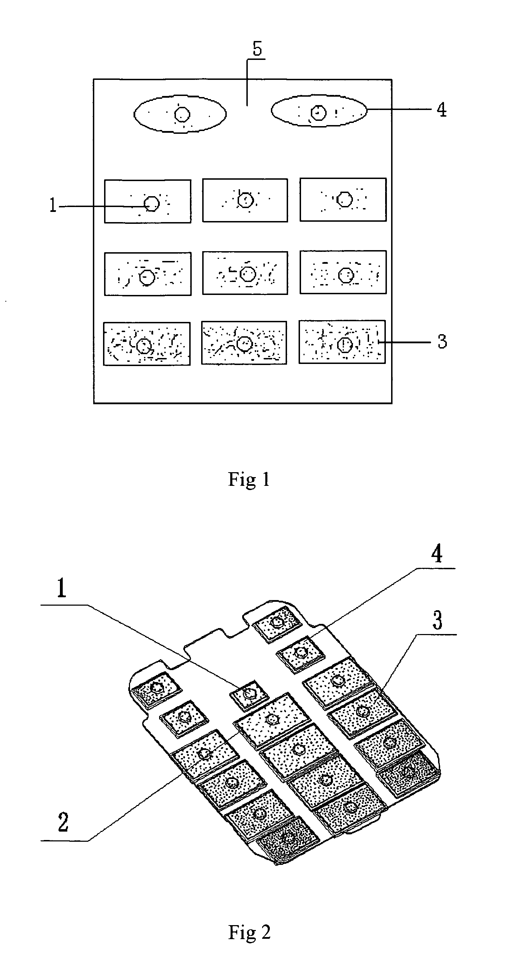

Fig 1 is a structure sketch map of the light guide board according to the first example of the invention. Referring to Fig 1, the example of the invention is described as follows. The light guide board in the present example comprises a buffer layer 5 and a plurality of discrete light guide plates 4. Light guide plate 4 has a first surface and a second surface. Light guide plate 4 has a light scattering portion 3. The first surface of light guide plate 4 is formed on the buffer layer 5 by injection molding. Pressing points 1 which have buffer function are formed on the second surface by injection molding. The buffer layer can be formed by silica gel or other types of transparent or white gel which has high light transmittance. Silica gel is selected to form the buffer layer 5 in the present example. More preferably, the pressing points 1 are also formed by silica gel.

Further, in the present invention, the pressing points 1 may be formed by injection molding on the surface of light guide plate 4 where the light scattering portion 3 is located or it may be formed on the surface of the light guide plate 4 where no light scattering portion 3 is located. In the present example, the pressing points 1 are preferred to be formed by injection molding on the surface of light guide plate 4 where light scattering portion 3 is located. The light scattering portions are in cone shapes and they have different heights. The amount of the light scattering portions is in a direct proportion relation with the distance between the light guide plate and the light source. The light scattering portions may be concave portions or convex portions set on the light guide plates. In the present example, the light scattering portions are preferred to be concave portions on the light guide plate. The light guide plate is formed by polycarbonate (PC) which has high light transmittance. The average thickness of the PC light guide plate is about 0.08-0.2mm. In the present example, the PC light guide plate is preferred to have a thickness of 0.12mm. PC light guide plate with a thickness of 0.12mm can satisfy cold pressure, ultra-thin performance requirements. The concave portions formed by cold pressing the PC light guide plate serve as the light scattering portions, the concave portions are in cone shape, and the heights of the cones are different. In this case, the light scattering performance may be better. As the light transmittance and the frequency for receiving light of the PC light guide plate material may differ, high light area and dark light area may be formed. To improve the uniformity of the light transmittance, more concave portions are formed on one end of the light guide plate where the light source is further and less concave portions are formed on the other end of the light guide plate where the light source is nearer. As shown in Fig 1, the amount of the concave portions is in a direct proportion relation with the distance between the light guide plate and the light source.

The PC plate through cold pressing treatment is cut into discrete PC light guide plates according to the size of keys. The PC light guide plate has an interface layer. The interface layer is suitable for forming liquid silica gel on by injection molding directly to increase the adhesion performance between the PC light guide plate and the silica gel. The interface layer is transparent and it has a thickness of about 5-10um which is neglectable relative to the thickness of the light guide board. The pressing points are formed on the surface of the PC light guide plate where light scattering portions are formed. Thus the key pressing handle of the light guide board in the present invention may be enhanced.

The light guide board in the present invention is mainly to form a light guide key board. The light guide key board comprises the above mentioned light guide board and keys. The keys are fixed in the mirror image area where the mirror surface is the contact surface between the light guide board and the buffer layer. When the light from the light source passes through the light guide board to the key, as the light emitting from the light guide board is uniform, the light emitting from the key is also uniform. Moreover, as the present light guide board has two layers of silica gel and relatively thin light guide plate, the light guide key board has good handle and is also very thin.

Fig 2 is a structure sketch map of the light guide board according to the second example in the present invention. Referring to Fig 2, the second example is described as follows. The Buffer layer 5 in the present example further comprises a hollow containing portion 2 which can house the key press. Preferably, the hollow containing portion 2 comprises two portions including continuous or non-continuous groove at the edge of containing portion 2 and a convex portion formed thereof in the centre of the containing portion 2. The light guide board has a first surface formed on the exterior surface of the convex portion of the containing portion. The convex exterior surface of the containing portion is equal to or slightly larger than the surface area of the light guide plate, such that it will be easy to fix the light guide plate and also ensure the nice appearance of the whole light guide board. Here, "Slightly larger" means that the surface area of the convex portion is 1%-10% larger than the light guide board. The surface area of the convex portion is in accordance with the key surface of electronic product.

The light guide plate 4, the light scattering portion 3, and the pressing point 1 in the present example are the same as example 1 described above and it will be omitted here.

A light guide key board formed from the light guide board of the present invention is also provided, the light guide key board comprises the light guide board as above described and the keys, and the keys are fixed in the containing portions. When the light from the light source passes through the light guide board to the key, as the light emitting from the light guide board is uniform, the light emitting from the key is also uniform. Moreover, as the present light guide board has two layers of silica gel and relatively thin light guide plate, the light guide key board has good handle and is also very thin.

Now the working principle of the light guide board will be described in conjunction with Fig 2, and the principle, as well as the advantages of the light guide board in the present invention will be better understood.

In the present example, LED light is selected as the light source. While the LED light passes through the highly transparent silica gel and emits to PC light guide plate 4 which has concave portions 3, as the transparency of the material and the frequency for receiving the light waves are different, the light transmitted through the high light area will be brighter and in the weak light transmitting area the light is darker. In designing, the concave portions 3 in the PC light guide plate nearer by the LED light source are distributed dispersedly, while the concave portions 3 in the PC light guide plate farther from the LED light source are distributed densely. But the density of the concave portions 3 in the different areas of the PC light guide plate 4 is in direct proportion relation with the distance between the light guide plate and the light source, and the depths of the concave portions 3 in different PC light guide plates 4 are different. Therefore, the light emitted from the light guide board is uniform. The whole light guide board is formed from silica gel and PC light guide plate by injection molding, so in the key board the PC light guide plate 4 distribution in the key areas is more like inlaying and forms as a whole with the edge silica gel. Thus the light guided is bright and uniform, meanwhile, the silica gel portion ensures the handle of the key board after assembly. Therefore the light guide board in the present invention may have uniform light guiding ability, good handle and super thin, and meets the current market requirements.

The above examples only described several embodiments of the present invention, and the description is detailed and specific. However, it shall not be considered as a limit of the present invention. Those who skilled in the field may have a lot of modifications and variations within the spirit of the invention which are still within the protection range of the present invention. Therefore, the protection range of the present invention shall be considered by the claims.

## Claims

1. A light guide board comprising:
a buffer layer (5); and
a plurality of discrete light guide plates (4) having a first surface formed on the buffer layer (5) by injection molding, a second surface having injection molded pressing points (1) with buffer function, the plurality of light guide plates having light scattering portions (3), **characterized in that**
said light scattering portions (3) are cones with different heights.

2. The light guide board according to claim 1, wherein the average thickness of said light guide plate (4) is about 0.08-0.2 mm.

3. The light guide board according to claim 1, wherein the pressing points (1) are formed on the surface of the light guide plate which comprises the light scattering portions (3).

4. The light guide board according to claim 1, wherein the pressing points (1) are formed on the surface of the light guide plate which has no light scattering portions (3).

5. The light guide board according to claim 1, wherein the light scattering portion (3) of the light guide plate (4) is set on a concave portion of the light guide plate (4).

6. The light guide board according to claim 1, wherein the light scattering portion (3) of the light guide plate (4) is set on a convex portion of the light guide plate (4).

7. The light guide board according to claim 1, wherein the light guide plate (4) is coated by an interface layer.

8. The light guide board according to claim 1, wherein the amount of said light scattering portions (3) is in a direct proportion to the distance between the light guide plate (4) and the light source.

9. The light guide board according to one of claims 1-8, wherein said buffer layer (5) has a hollow containing portion (2) for containing keys, which has continuous or non-continuous grooves, and a convex portion formed thereof, the first surface of said light guiding plate (4) is formed on the convex exterior surface of the containing portion (2).

10. A light guide key board, wherein the key board comprises:
the light guide board of any one of claims 1 through 8; and
keys;
wherein said keys are fixed in the mirror image area where the mirror surface is the contact surface between the light guide board (4) and the buffer layer (5).

11. A light guide key board, wherein the key board comprises the light guide board (4) of claim 9 and keys fixed in the hollow containing portion (2).

## Patentansprüche

1. Lichtleiterkarte, aufweisend:
eine Pufferschicht (5); und
eine Vielzahl von diskreten Lichtleiterplatten (4), die eine erste Oberfläche, die durch Spritzgießen auf der Pufferschicht (5) ausgebildet ist, und eine zweite Oberfläche, die spritzgegossene Pressstellen (1) mit Pufferfunktion aufweist, aufweisen, wobei die Vielzahl der Lichtleiterplatten Lichtstreuungsbereiche (3) aufweist,
**dadurch gekennzeichnet, dass**
die besagten Lichtstreuungsbereiche (3) Kegel mit verschiedenen Höhen sind.

2. Lichtleiterkarte nach Anspruch 1, wobei die durchschnittliche Dicke der besagten Lichtleiterplatte (4) etwa 0,08-0,2 mm beträgt.

3. Lichtleiterkarte nach Anspruch 1, wobei die Pressstellen (1) auf der Oberfläche der Lichtleiterplatte, die die Lichtstreuungsbereiche (3) aufweist, ausgebildet sind.

4. Lichtleiterkarte nach Anspruch 1, wobei die Pressstellen (1) auf der Oberfläche der Lichtleiterplatte, die keine Lichtstreuungsbereiche (3) aufweist, ausgebildet sind.

5. Lichtleiterkarte nach Anspruch 1, wobei der Lichtstreuungsbereich (3) der Lichtleiterplatte (4) auf einem konkaven Bereich der Lichtleiterplatte (4) positioniert ist.

6. Lichtleiterkarte nach Anspruch 1, wobei der Lichtstreuungsbereich (3) der Lichtleiterplatte (4) auf einem konvexen Bereich der Lichtleiterplatte (4) positioniert ist.

7. Lichtleiterkarte nach Anspruch 1, wobei die Lichtleiterplatte (4) mit einer Grenzflächenschicht beschichtet ist.

8. Lichtleiterkarte nach Anspruch 1, wobei die Menge der besagten Lichtstreuungsbereiche (3) direkt proportional zum Abstand zwischen der Lichtleiterplatte (4) und der Lichtquelle ist.

9. Lichtleiterkarte nach einem der Ansprüche 1-8, wobei die besagte Pufferschicht (5) einen hohlen Aufnahmebereich (2) zur Aufnahme von Schlüsseln aufweist, der durchgängige oder nicht durchgängige Nuten und einen daraus ausgebildeten konvexen Bereich aufweist, wobei die erste Oberfläche der besagten Lichtleiterplatte (4) auf der konvexen Außenfläche des Aufnahmebereichs (2) ausgebildet ist.

10. Lichtleiterschlüsselkarte, wobei die Schlüsselkarte aufweist:
die Lichtleiterkarte nach einem der Ansprüche 1 bis 8; und
Schlüssel;
wobei die besagten Schlüssel auf der Spiegelbildfläche befestigt sind, wo die Spiegelfläche die Kontaktfläche zwischen der Lichtleiterkarte (4) und der Pufferschicht (5) ist.

11. Lichtleiterschlüsselkarte, wobei die Schlüsselkarte die Lichtleiterkarte (4) nach Anspruch 9 und im hohlen Aufnahmebereich (2) befestigte Schlüssel aufweist.

## Revendications

1. Plaque de guidage de lumière, comprenant:
une couche (5) tampon ; et
une pluralité de plaques (4) de guidage de lumière discrètes ayant une première surface formée sur la couche (5) tampon par moulage par injection, une seconde surface ayant des points (1) de compression moulés par injection avec fonction tampon, la pluralité des plaques de guidage de lumière ayant des parties (3) de diffusion de lumière,
**caractérisée en ce que**
lesdites parties (3) de diffusion de lumière sont des cônes de hauteurs différentes.

2. Plaque de guidage de lumière selon la revendication 1, dans laquelle l'épaisseur moyenne de ladite plaque (4) de guidage de lumière est d'environ 0,08-0,2 mm.

3. Plaque de guidage de lumière selon la revendication 1, dans laquelle les points (1) de compression sont formés sur la surface de la plaque de guidage de lumière qui comprend des parties (3) de diffusion de lumière.

4. Plaque de guidage de lumière selon la revendication 1, dans laquelle les points (1) de compression sont formés sur la surface de la plaque de guidage de lumière qui n'a pas de parties (3) de diffusion de lumière.

5. Plaque de guidage de lumière selon la revendication 1, dans laquelle la partie (3) de diffusion de lumière de la plaque (4) de guidage de lumière est placée sur une partie concave de la plaque (4) de guidage de lumière.

6. Plaque de guidage de lumière selon la revendication 1, dans laquelle la partie (3) de diffusion de lumière de la plaque (4) de guidage de lumière est placée sur une partie convexe de la plaque (4) de guidage de lumière.

7. Plaque de guidage de lumière selon la revendication 1, dans laquelle la plaque (4) de guidage de lumière est recouverte d'une couche d'interface.

8. Plaque de guidage de lumière selon la revendication 1, dans laquelle la quantité desdites parties (3) de diffusion de lumière est en proportion directe avec la distance entre la plaque (4) de guidage de lumière et la source de lumière.

9. Plaque de guidage de lumière selon l'une des revendications 1-8, dans laquelle ladite couche (5) tampon a une partie (2) de réception creuse pour recevoir des clés, qui a des rainures continues ou non continues, et une partie convexe formée à partir de celle-ci, la première surface de ladite plaque (4) de guidage de lumière étant formée sur la surface externe convexe de la partie (2) de réception.

10. Clavier de guidage de lumière, dans laquelle le clavier comprend :
le clavier de guidage de lumière selon l'une des revendications 1 à 8 ; et
des clés ;
lesdites clés étant fixées dans la zone d'image en miroir où la surface de miroir est la surface de contact entre la plaque (4) de guidage de lumière et la couche (5) tampon.

11. Clavier de guidage de lumière, dans lequel le clavier comprend la plaque (4) de guidage de lumière selon la revendication 9 et des clés fixées dans la partie (2) de réception creuse.
